# EUROPÄISCHE PATENTSCHRIFT

(11) **EP 0 968 869 B1**
(45) Veröffentlichungstag und Bekanntmachung des Hinweises auf die Patenterteilung: **02.05.2003**
(21) Anmeldenummer: 99111396.0
(22) Anmeldetag: 11.06.1999
(51) Int. Cl.: B60K 20/04, B62D 1/18

(54) **Selbstfahrende landwirtschaftliche Erntemaschine**
Self-propelled agricultural harvesting machine
Moissonneuse agricole autopropulsée

(30) Priorität: 03.07.1998 DE 19829780
(43) Veröffentlichungstag der Anmeldung: 05.01.2000
(73) Patentinhaber: CLAAS Selbstfahrende Erntemaschinen GmbH, 33428 Harsewinkel (DE)
(72) Erfinder: Fögeling, Walter, 33442 Herzebrock-Clarholz (DE)

(56) Entgegenhaltungen:
- GB-A- 1 262 543

## Beschreibung

Die Erfindung betrifft eine selbstfahrende Maschine mit einer Fahrerkabine, in der eine auf wenigstens einem ortsfesten Bolzen schwenkbar gelagerte Lenksäule angeordnet und mittels wenigstens eines Arretierelementes gesichert ist, welche von einem einen Auslösehebel betätigbaren Pedal zum Verschwenken der Lenksäule entriegelbar ist, und mit einem in der Fahrerkabine angeordneten Schalthebel an dem ein Schaltübertragungselement eines in mehreren Stufen schaltbaren Getriebes angelenkt ist. Bei selbstfahrenden Fahrzeugen ist das in mehreren Stufen schaltbare Getriebe notwendig, da die Fahrgeschwindigkeit zum Beispiel beim Ernteeinsatz deutlich geringer ist als bei Leerfahrten auf der Straße. Das den Hauptfahrantrieb bildende Schaltgetriebe ist neben der Rückfahrschaltstufe normalerweise für mindestens zwei weitere Schaltstufen für die Vorfahrt ausgelegt. Diese drei Funktionen sind über den Schalthebel und dem daran angekoppelten Schaltübertragungselement des Getriebes schaltbar. Als Schaltübertragungselement kommt ein Gestänge, ein Betätigungszug oder eine hydraulische Einrichtung in Betracht. Unabhängig von der Ausführung ist der Schalthebel mit dem Eingangsglied des Schaltübertragungselementes gekoppelt. Das Getriebe ist mit einer Schiebewelle ausgerüstet, auf der die entsprechenden Zahnräder beim Schalten bewegt werden. Die Schaltvorgänge werden beim Stillstand der Erntemaschine durchgeführt, da innerhalb der beiden Schaltstufen durch einen hydraulischen Antrieb die Fahrgeschwindigkeit noch stufenlos regelbar ist. Bei den bislang bekannten Erntemaschinen ist der Handschalthebel innerhalb der Fahrerkabine neben dem Fahrersitz angeordnet.

Die das Lenkrad tragende Lenksäule ist innerhalb eines vorgegebenen Winkelbereiches in und entgegen der Vorwärtsfahrtrichtung der landwirtschaftlichen Erntemaschine verstellbar, damit der jeweilige Fahrer sich die Lenksäule beziehungsweise das Lenkrad in die für ihn günstigste Stellung einstellen kann. Für diesen Zweck ist die Lenksäule einteilig oder aus mehreren gelenkig miteinander verbundenen Abschnitten gebildet. Mit ihrem Fußteil ist die Lenksäule gelenkig mit dem Boden der Fahrerkabine verbunden. Bei der einteiligen, wie auch bei der mehrteiligen Ausführung ist oder sind in Nähe der Schwenkpunkte Sperr- und Entriegelungseinrichtungen vorgesehen, die als Hand- oder Fußhebel von der Kabine aus bedienbar sind, um zum Beispiel ein Stellelement in Form einer sperrbaren Gasdruckfeder zu betätigen. Bei dieser an sich bewährten Ausführung wird die Anzahl der Betätigungselemente als störend empfunden, da sie den Bewegungsbereich des Fahrers einschränken.

Aus der DE 1755309 A1 ist eine Lenkvorrichtung für einen selbstfahrenden Mähdrescher mit einem Steuerknüppel bekannt, der nicht nur für die Lenkung des Mähdreschers verwendet wird, sondern auch noch mit einer Steuervorrichtung verbunden ist, um beispielsweise zu erreichen, daß die Fahrtgeschwindigkeit des Mähdreschers verändert wird, wenn der Steuerknüppel in Fahrtrichtung verschwenkt wird. Bei einer Verschwenkung quer zur Fahrtrichtung werden die Laufräder verstellt, um den Mähdrescher zu lenken. Bei diesem vorgenannten Mähdrescher wirkt der Steuerknüppel beim Verschwenken in oder entgegen der Fahrtrichtung auf eine Hydraulikeinrichtung, um die Fahrgeschwindigkeit des Mähdreschers stufenlos zu verändern. Über die Schaltung eines mechanischen Getriebes ist dieser Literaturstelle nicht zu entnehmen.

Der Erfindung liegt die Aufgabe zugrunde, eine selbstfahrende Maschine der eingangs näher beschriebenen Art so zu gestalten, daß in konstruktiv einfacher Weise die Auslösung der Schaltfunktionen gewährleistet ist, ohne daß durch Überladung des Fahrerstandes mit Betätigungseinrichtungen verschiedener Art der Bedienkomfort eingeschränkt wird.

Die gestellte Aufgabe wird gelöst, in dem das Schaltgestänge mittels einer bedarfsweise betätigbaren Mitnahmevorrichtung mit der Lenksäule oder mit einem Teil der Lenksäule derart koppelbar ist, daß von der Schwenk- und / oder der Drehbewegung der Lenksäule die für den Schaltvorgang des Getriebes notwendige Schaltbewegung des Schaltgestänges ableitbar ist.

Erfindungsgemäß wird nunmehr die ohnehin vorhandene Möglichkeit des Schwenkens der Lenksäule benutzt, um das Getriebe in die jeweils gewünschte Schaltfunktion zu schalten, da der Schalthebel im Bedarfsfalle mit der Lenksäule in eine Mitnahmeverbindung bringbar ist, in der er der Schwenkbewegung der Lenksäule folgt. Dadurch kann bei Stillstand der Erntemaschine das Getriebe geschaltet werden. Im normalen Betrieb steht die Mitnahmevorrichtung in keiner Mitnahmeverbindung mit der Lenksäule, so daß die Lenksäule in der gewohnten Weise verstellt werden kann. In einer konstruktiv einfachen Form wird die zuvor beschriebene Möglichkeit umgesetzt, indem der Schalthebel des Schaltgestänges auf einem die Lenksäule drehbeweglich tragenden Bolzen frei drehbar gelagert ist, daß mittels der bedarfsweise betätigbaren Mitnahmevorrichtung der Schalthebel mit der Lenksäule drehbeweglich koppelbar ist, und daß ein Zusatzpedal zur gleichzeitigen Betätigung der Mitnahmevorrichtung und des Auslösehebels zur Entriegelung der Feststellvorrichtung vorgesehen ist. Die Verstellung der Lenksäule in der gewohnten Weise ist möglich, da der Schalthebel auf den die Lenksäule tragenden Bolzen freidrehbar gelagert ist. Wird ausschließlich die Lenksäule verstellt, steht demzufolge der Schalthebel still. Ist er jedoch durch die Mitnahmevorrichtung mit der Lenksäule drehbeweglich gekoppelt, folgt er der Schwenkbewegung der Lenksäule. Diese Schwenkbewegung wird dann zum Schalten des Getriebes ausgenutzt, wobei zumindest das Eingangsglied des Schaltübertragungselementes, beispielsweise ein Hebel entsprechend gestaltet sein muß und benachbart der Lenksäule stehen muß. Das Schalten des Getriebes wird für den Fahrer nicht erschwert, da er letztlich nur das Zusatzpedal betätigen muß, wodurch über die Mitnahmevorrichtung der Schalthebel mit der Lenksäule gekoppelt wird. Nach dem der Schaltvorgang durchgeführt wurde, wird das Zusatzpedal nicht mehr betätigt, so daß dann bei Betätigen des normalen Fußpedals die Lenksäule wieder in die gewünschte Position gebracht werden kann. Beim Loslassen des Fußpedals folgt dann wiederum die Verriegelung. Beim nächsten Schaltvorgang ist es jedoch notwendig, daß zunächst die Lenksäule in die der benutzten Schaltstufe entsprechende Stellung gebracht wird und dann durch Betätigen des Zusatzpedals der Schalthebel über die Mitnahmevorrichtung der Lenksäule gekoppelt wird. Zweckmäßigerweise ist der Schalthebel und das daran angeschlossene Schaltübertragungselement so ausgelegt, daß in der Mittelstellung der Lenksäule das Getriebe in der Leerlaufstellung steht und daß in den beiden Endstellungen der Lenksäule das Getriebe in die beiden anderen Schaltstufen geschaltet wird.

Eine konstruktiv einfache Lösung ergibt sich, wenn die Mitnahmevorrichtung im wesentlichen aus einem in Lenkachsrichtung der Lenksäule verfahrbaren federbelasteten Sperrbolzen besteht, der in einem Versatz zur Lenksäule steht und in einem fest mit der Lenksäule verbundenen Führungskörper geführt ist und mit mittels des Zusatzpedals entgegen der Wirkung der Druckfeder in die Mitnahmeverbindung mit dem Schalthebel bringbar ist. Nach dem die Lenksäule lagegerecht zu der jeweiligen Stellung des Schalthebels steht, kann der Sperrbolzen im Eingriff mit dem Schalthebel gebracht werden, so daß der Schaltvorgang durch Verschwenken der Lenksäule durchgeführt werden kann. Das Schaltübertragungselement oder auch das Schaltgetriebe sind so ausgelegt, daß nach dem Schaltvorgang die entsprechende Schaltstufe erhalten bleibt.

Damit der Fahrer für einen Schaltvorgang ausschließlich das Zusatzpedal betätigen muß, ist in weiterer Ausgestaltung vorgesehen, daß die Schwenkachsen des Zusatzpedals mit der Schwenkachse des Fußpedals koppelbar ist. Beim Treten des Zusatzpedals wird dann gleichzeitig das Pedal mitgenommen, wodurch der Auslösehebel ebenfalls betätigt wird, so daß die Lenksäule verstellt werden kann und der Sperrbolzen durch den Druck der Feder in den Schalthebel eingreift sobald er in der entsprechenden Stellung steht. Nach dem Schaltvorgang muß der Fahrer allerdings das Fußpedal betätigen, um ausschließlich die Lenksäule in die gewünschte Position zu bringen. Dies wird konstruktiv besonders einfach, wenn das Zusatzpedal mit einem drehbar gelagerten Bolzen fest verbunden ist, daß auf dem Bolzen eine Pedalhülse drehbar gelagert, an die das Fußpedal und der Auslösehebel derart fest ausgelegt sind, daß bei Betätigung des Fußpedals der mit dem Zusatzpedal fest verbundene Bolzen stillsteht. Dazu ist vorgesehen, daß in den Bolzen wenigstens ein gegenüber seiner Außenfläche vorstehender Querstift fest eingesetzt ist und daß in der Pedalhülse in Umfangsrichtung verlaufende Schlitze vorgesehen sind, in die die überstehenden Enden des Querstiftes eingreifen. Diese Schlitze sind so ausgelegt, daß beim Treten des Zusatzpedals die Pedalhülse und demzufolge das Fußpedal mitgenommen wird. Die Schlitze sind um einen Winkel von 180° zueinander versetzt und erstrecken sich über einen solchen radialen Bereich, der dem Schwenkwinkel des Zusatzpedals entspricht. In weiterer Ausgestaltung ist vorgesehen, daß der Führungskörper segmentartig ausgebildet ist und an der der Schwenkachse abgewandten Seite eine Führungsbuchse für den Sperrbolzen aufweist. Damit eine einfache Koppelung des Sperrbolzens mit dem Schalthebel möglich ist, ist vorgesehen, daß der Schalthebel eine Nabe aufweist, in dessen Mantelfläche an der dem Zusatzpedal zugewandt liegenden Seite ein Sackloch eingebracht ist, in die der Sperrbolzen einfahrbar ist.

Anhand der beiliegenden Zeichnungen wird die Erfindung noch näher erläutert.

Es zeigen:
- Fig. 1: den Bereich der Fahrerkabine einer erfindungsgemäßen landwirtschaftlichen Erntemaschine in einer schematischen Seitenansicht,
- Fig. 2: die teilweise dargestellte Lenksäule mit der zugeordneten Verstell- und Schalteinrichtung in einer Seitenansicht,
- Fig. 3: die Lenksäule nach der Fig. 2 in einer Stirnansicht und
- Fig. 4: eine Einzelheit im Aufriß, das Fuß- und Zusatzpedal im Zusammenwirken mit dem Arretierelement zeigend.
- Fig. 5: die teilweise dargestellte Lenksäule mit der Verstell-und Schalteinrichtung in einer weiteren Ausführungsform in einer Seitenansicht, und
- Fig. 6: eine aus einem Ober- und Unterteil bestehende Lenksäule mit einem Gestänge.

Die nur teilweise angedeutete landwirtschaftliche Erntemaschine 10 ist im vorderen Bereich mit einer Fahrerkabine 11 ausgestattet, in der eine ein Lenkrad 12 tragende Lenksäule 13 installiert ist, die innerhalb eines Verstellbereiches in Fahrtrichtung verstellbar ist. Das Lenkrad 12 ist auf die Lenkwelle 14 drehfest aufgesetzt. An die Lenksäule 13 ist in noch näher erläuterter Weise ein Schalthebel 15 angeschlossen, mit dem über ein Schaltübertragungselement 16 ein andeutungsweise dargestelltes Schaltgetriebe 17 geschaltet werden kann. In der Fahrerkabine 11 sind außerdem noch der Fahrersitz 18 sowie weitere Schalt- und Bedienelemente für den Betrieb der landwirtschaftlichen Erntemaschine 10 installiert, die jedoch aus Gründen der vereinfachten Darstellung nicht gezeichnet sind. Direkt vor der Fahrerkabine 11 liegt ein nicht näher erläuterter Einzugskanal 19 für das Erntegut. Aus Gründen der vereinfachten Darstellung ist das Schaltübertragungselement 16 als eine Stange dargestellt, doch sind auch mehrteilige Schaltgestänge sowie flexible Betätigungszüge oder hydraulische Einrichtungen möglich. Die Lenkwelle 14 ist fester Bestandteil der Lenksäule 13. Diese ist auf zwei fluchtende, ortsfeste Bolzen 21, 22 schwenkbar gelagert. Die Bolzen 21, 22 sind in Augen 23, 24 eingesetzt, die an einer festen Lagerplatte 25 angesetzt sind. Zur Festsetzung der Lenksäule 13 in den verschiedenen Stellungen dient ein Arretierelement in Form einer arretierbaren Gasdruckfeder 26 auf deren Kolbenstange 27 ein Auslösehebel 28 wirkt, der beim Betätigen eines Fußpedals 29 so verschwenkt wird, daß die Kolbenstange 27 in das zylindrische Gehäuse hineingefahren wird, wodurch die Lenksäule 13 freigegeben wird. Die Gasdruckfeder 26 ist mit ihren dem Auslösehebel 28 gegenüberliegenden Ende an einem Ausleger 30 der Lagerplatte 25 aufgehängt.

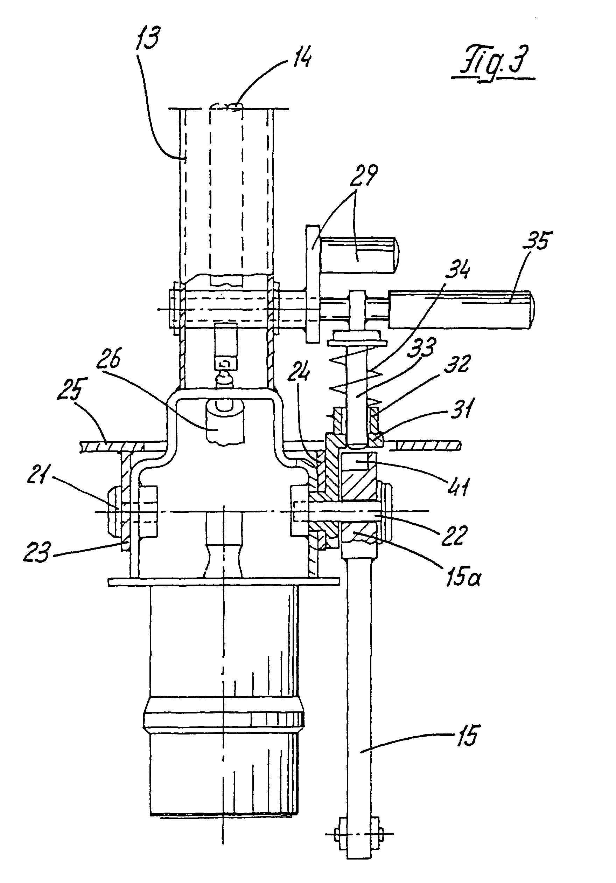

Auf den in der Darstellung gemäß der Fig. 3 rechten Bolzen 22 ist direkt neben dem Auge 24 ein Führungskörper 31 und der Schalthebel 15 jeweils frei drehbar gelagert. Der Führungskörper 31 ist segmentartig ausgebildet und an der dem Schalthebel 15 abgewandten Seite mit einer Führungsbuchse 32 ausgestattet (Fig.3). In diese Führungsbuchse 32 ist ein eine Feststellvorrichtung bildender Sperrbolzen 33 geführt, der mittels einer Druckfeder 34 gegen ein Zusatzpedal 35 gedrückt wird. Dazu ist der Sperrbolzen mit einem Ansatz versehen, gegen den sich die Druckfeder abstützt. Das andere Ende der Druckfeder stützt sich an dem Führungskörper 31 ab, wobei die Führungsbuchse 32 von den Federwindungen umschlungen ist.

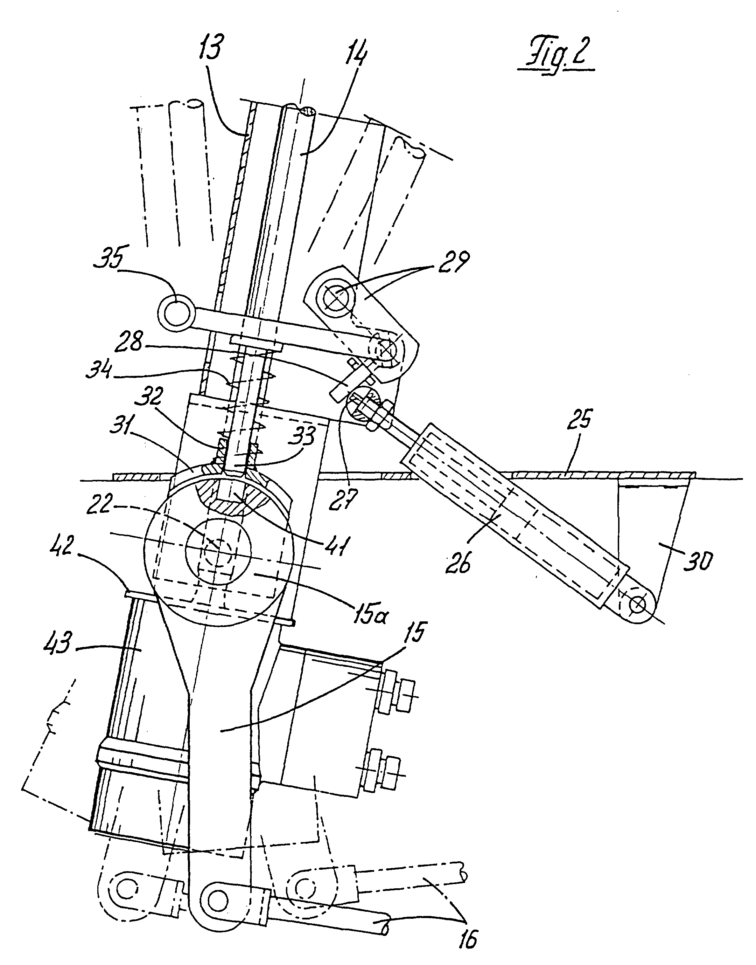

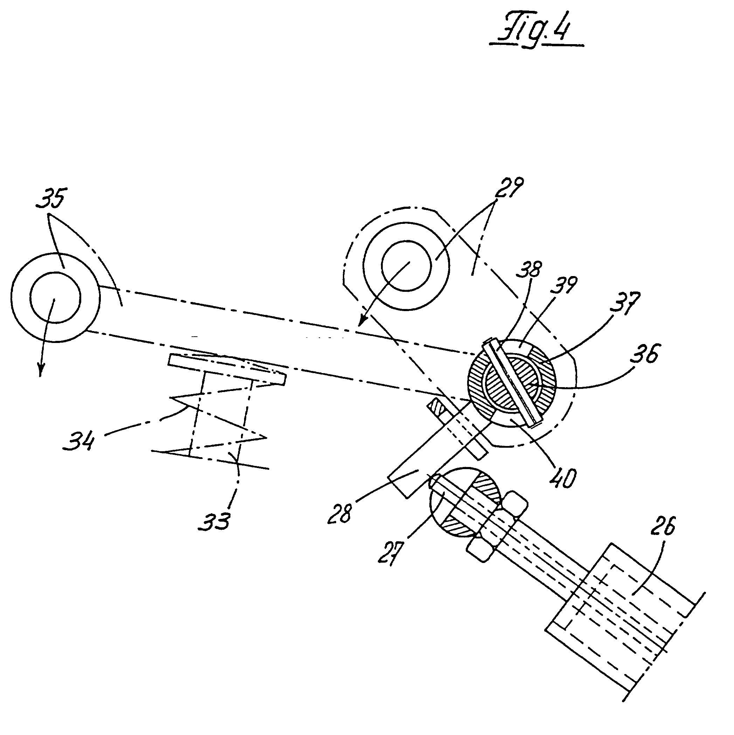

Wie die Fig. 4 als Einzelheit zeigt, ist das Zusatzpedal 35 mit einem Bolzen 36 verbunden, der in der Lenksäule 13 drehbar gelagert ist. Auf diesem Bolzen 36 ist außerdem eine Pedalhülse 37 drehbar gelagert, die fest mit dem Fußpedal 29 verbunden ist. Die Pedalhülse 37 erstreckt sich über den Bereich, der sich von dem Fußpedal 29 bis zum freien, dem Zusatzpedal gegenüberliegenden Ende erstreckt. In den Bolzen 36 ist ein Querstift 38 fest eingesetzt, dessen Enden gegenüber der Außenfläche des Bolzens 36 vorstehen und die in Schlitzen 39, 40 der Pedalhülse 37 eingreifen. Die Schlitze 39, 40 erstrecken sich in Umfangsrichtung der Pedalhülse 37 über einen bestimmten Winkelbereich und sich um einen Winkel von 180° zu einander versetzt. Wie die Fig. 2 und 3 zeigen ist die Nabe 15a des Schalthebels 15 an der dem Sperrbolzen 33 zugewandten Seite mit einem Sackloch 41 versehen, in die der Sperrbolzen 33 eingefahren werden kann, wie noch näher erläutert wird.

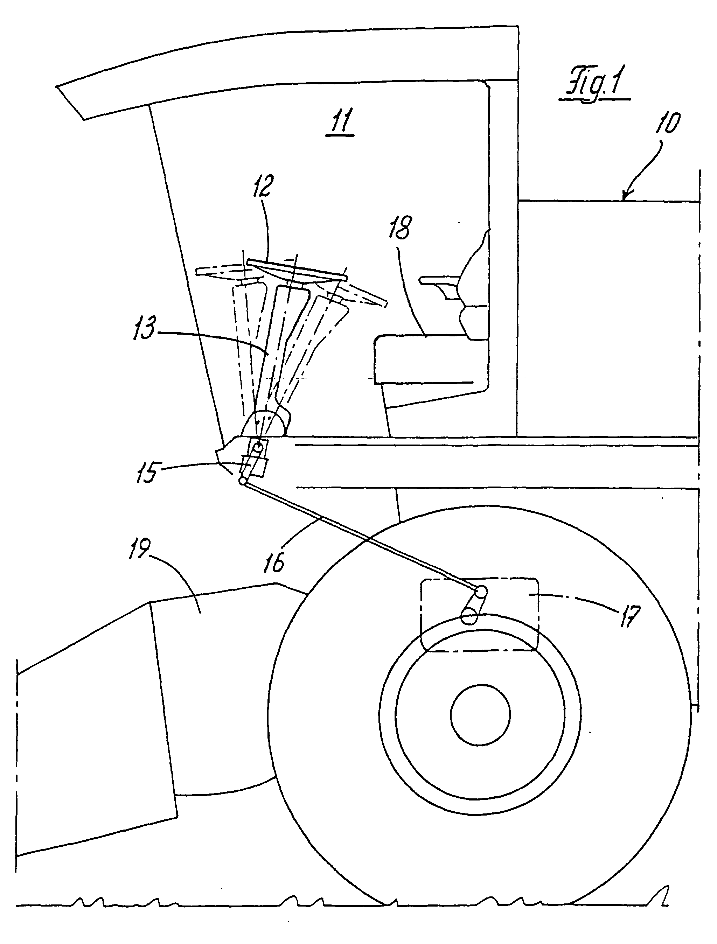

In den Fig. 1 bis 3 ist die Lenksäule 13 in der Mittelstellung in Vollinien dargestellt. Der Schalthebel 15 steht ebenfalls in der Mittelstellung und ist in Vollinien dargestellt. Sofern das Schaltgetriebe 17 in die drei Schaltstufen schaltbar ist, entspricht diese Stellung des Schalthebels 15 der Leerlaufstellung. Die beiden Endstellungen der Lenksäule 13 sind in strichpunktierten Linien angedeutet, ebenso die des Schalthebels 15 und des Schaltübertragungselementes 16. Möchte der Fahrer der Erntemaschine 10 die Stellung der Lenksäule 13 verändern, muß er das Fußpedal 25 betätigen. Sobald die arretierbare Gasdruckfeder 26 die Lenksäule 13 entriegelt, kann er sie innerhalb des Verstellbereiches stufenlos verstellen. Durch Loslassen des Fußpedals 29 wird die Stellung wieder gesichert. Soll jedoch das Schaltgetriebe 17 in eine andere Schaltstufe geschaltet werden, muß er das Zusatzpedal 35 in der gleichen Richtung verschwenken. Der Querstift 38 nimmt dann die Pedalhülse 37 mit und demzufolge auch das Fußpedal 29. Das Zusatzpedal 35 kann jedoch nur um den vollen Schwenkwinkel betätigt werden, wenn die Lenksäule 13 in eine der Stellung des Schalthebels 15 entsprechende Stellung gebracht wird, damit der Sperrbolzen 33 in das Sackloch 41 eingefahren werden kann. Über den Sperrbolzen 33 steht dann der Schalthebel 15 in einer Mitnahmeverbindung zur Lenksäule 13. Durch eine entsprechende Schwenkbewegung der Lenksäule 13 wird dann der Schalthebel 15 auf dem Bolzen 22 verschwenkt, so daß über das Schaltübertragungselement 16 das Schaltgetriebe 17 in die gewünschte Schaltstufe geschaltet werden kann. Wird das Zusatzpedal 35 losgelassen, wird durch die Druckfeder 34 der Sperrbolzen 33 außer Eingriff mit der Nabe 15a des Schalthebels 15 gebracht. Die Stellung der Lenksäule 13 wird dann durch die arretierbare Gasdruckfeder 26 arretiert. Zur Verstellung muß der Fahrer dann das Fußpedal 29 betätigen. Es ergibt sich insbesondere aus der Fig. 2, daß das Zusatzpedal 35 nur dann betätigt werden kann, wenn der Sperrbolzen 33 fluchtend zum Sackloch 41 steht. Da im Normalfall das Schaltgetriebe 17 nur für drei Schaltstufen ausgelegt ist, ist je nach Stellung des Schalthebels 15 die Lenksäule 13 entweder in die beiden Endstellungen oder in die Mittelstellung zu schalten. Der untere, den ortsfesten Bolzen 21, 22 zugeordnete Bereich der Lenksäule 13 ist gabelförmig ausgebildet. An die freien Enden ist eine Montageplatte 42 angesetzt, an die das hydraulische Lenkventil 43 installiert ist.

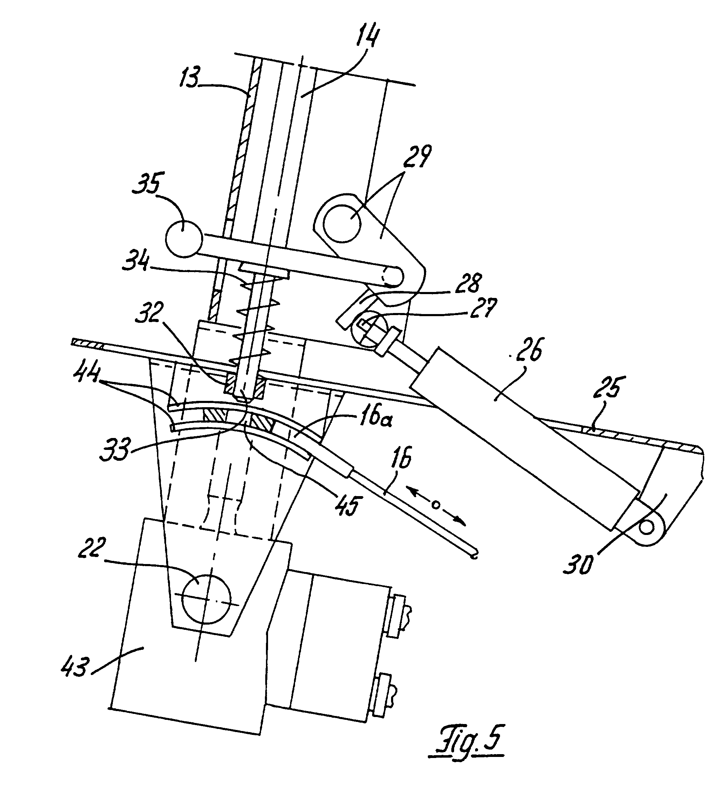

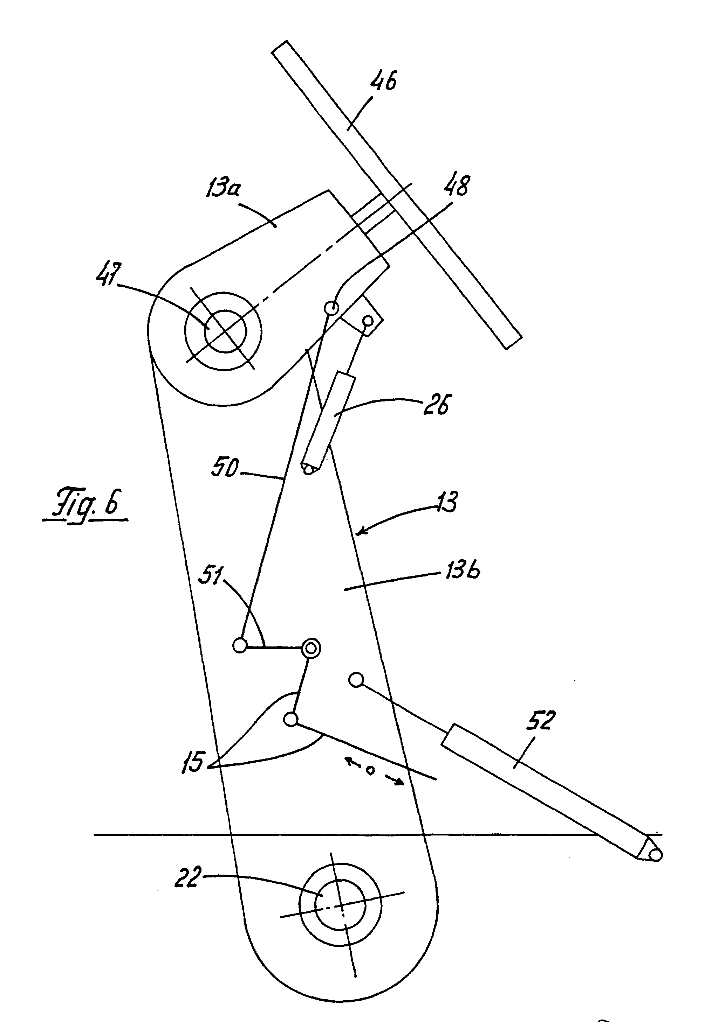

Die Ausführung nach der Figur 5 unterscheidet sich von der nach der Figur 2 im wesentlichen dadurch, daß das Schaltgestänge 16 direkt mittels eines Schiebeteils 16a mit der Lenksäule beziehungsweise mit dem Sperrbolzen 33 in Wirkverbindung gebracht wird. Hierzu ist das Schiebeteil 16a entsprechenden der Form seiner Führungen 44 bogenförmig ausgebildet. Die Führungen 44 sind ortsfest mit dem -Fahrzeug verbunden. Die Führungen 44 verlaufen konzentrisch zu der durch den Bolzen 22 gegebenen Schwenkachse der Lenksäule 13. In seinem Endbereich ist das Schiebeteil 16a mit einer Bohrung 45 versehen in die beim Schaltvorgang der Sperrbolzen 33 in der bereits beschriebenen Weise eingreift. Die konzentrische Gestaltung der Führungen 44 ermöglicht es, daß die Lenksäule 13 unabhängig vom Schiebeteil 16a zur Einstellung verschwenkt werden kann. Die Figur 6 zeigt rein schematisch eine aus einem Oberteil 13a und einem Unterteil 13b gebildete Lenksäule 13. Das Oberteil 13a trägt das Lenkrad 46. Das Oberteil 13a und das Unterteil 13b sind gemeinsam um den Bolzen 22 schwenkbar. Außerdem ist das Oberteil 13a um einen Gelenkbolzen 47 verschwenkbar mit dem das Oberteil 13a und das Unterteil 13b gelenkig verbunden sind. Auf einem festen Bolzen 48 des Oberteils 13a und einem festen Bolzen 49 des Unterteils 13b sind Lenker 50, 51 eines Übertragungsgestänges gelagert. Diese Lenker 50, 51 ermöglichen die Verschwenkung des Oberteils 13a um den Gelenkbolzen 47 . Wird das Übertragungsgestänge blockiert, wird der Schalthebel 15 des Schaltgestänges um den Bolzen 49 des Unterteils 13b geschwenkt, wodurch der Schaltvorgang eingeleitet wird. An dem Unterteil 13b ist eine weitere arretierbare Gasdruckfeder 52 zur Feststellung angeschlossen.

Die Erfindung ist nicht auf die dargestellten Ausführungsbeispiele beschränkt. Wesentlich ist, daß zwischen den schwenkbaren Lenksäulenabschnitten oberhalb und/oder unterhalb der Schwenkachse und einem weiteren Funktionselement eine bei Bedarf koppelbare Betätigungseinrichtung für das Funktionselement vorhanden ist.

## Patentansprüche

1. Selbstfahrendes Fahrzeug, insbesondere landwirtschaftliche Erntemaschine, mit einer Fahrerkabine (11), in der eine auf wenigstens einem ortsfesten Bolzen (21,22) schwenkbar gelagerte Lenksäule (13) angeordnet und mittels einer Feststellvorrichtung gesichert ist, welche von einem Betätigungselement aus zwecks Verschwenkung der Lenksäule (13) entsperr- und verriegelbar ist, und mit einem unterhalb des Kabinenbodens angeordneten, einen Schalthebel (15) aufweisenden Schaltgestänge, an dem ein Schaltübertragungselement (16) eines in mehreren Stufen schaltbaren Getriebes (17) angelenkt ist,
**dadurch gekennzeichnet,**
**daß** das Schaltgestänge mittels einer bedarfsweise betätigbaren Feststellvorrichtung mit der Lenksäule (13) oder mit einem Teil der Lenksäule derart koppelbar ist, daß von der Schwenk- und/oder der Drehbewegung der Lenksäule (13) die für den Schaltvorgang des Getriebes notwendige Schaltbewegung des Schaltgestänges ableitbar ist.

2. Selbstfahrendes Fahrzeug insbesondere landwirtschaftliche Erntemaschine, nach Anspruch 1,
**dadurch gekennzeichnet,**
**daß** der Schalthebel (15) des Schaltgestänges auf einem die Lenksäule (13) drehbeweglich tragenden Bolzen (21, 22) frei drehbar gelagert ist, daß mittels der bedarfsweise betätigbaren Mitnahmevorrichtung der Schalthebel (15) mit der Lenksäule (13) drehbeweglich koppelbar ist, und daß ein Zusatzpedal (35) zur gleichzeitigen Betätigung der Mitnahmevorrichtung und des Auslösehebels (28) zur Entriegelung der Feststellvorrichtung (26) vorgesehen ist.

3. Selbstfahrendes Fahrzeug, insbesondere landwirtschaftliche Erntemaschine, nach Anspruch 1 oder 2,
**dadurch gekennzeichnet,**
**daß** die Feststellvorrichtung 26 im wesentlichen aus einem in Lenkachsrichtung der Lenkwelle (14) der Lenksäule (13) verfahrbaren, federbelasteten Sperrbolzen (33) besteht, der in einem Versatz zur Lenkwelle (14) steht und in einem fest mit der Lenksäule (13) verbundenen Führungskörper (31) geführt und mittels des Zusatzpedals (35) entgegen der Wirkung der Druckfeder (34) in die Mitnahmeverbindung mit dem Schalthebel (15) bringbar ist.

4. Selbstfahrendes Fahrzeug, insbesondere landwirtschaftliche Erntemaschine, nach einem oder mehreren der Ansprüche 2 bis 3,
**dadurch gekennzeichnet,**
**daß** die Schwenkachse des Zusatzpedals (35) mit der Schwenkachse des Fußpedals (29) koppelbar ist.

5. Selbstfahrendes Fahrzeug, insbesondere landwirtschaftliche Erntemaschine, nach Anspruch 4,
**durch gekennzeichnet,**
daß das Zusatzpedal (35) mit einem drehbar gelagerten Bolzen (36) fest verbunden ist, daß auf dem Bolzen (36) eine Pedalhülse (37) drehbar gelagert ist, an die das Fußpedal (29) und der Auslösehebel 28 derart fest angeordnet sind, daß bei Betätigung des Fußpedals (29) der fest mit dem Zusatzpedal (35) verbundene Bolzen (36) stillsteht.

6. Selbstfahrendes Fahrzeug, insbesondere landwirtschaftliche Erntemaschine, nach Anspruch 5,
**dadurch gekennzeichnet,**
**daß** in den Bolzen (36) wenigstens ein gegenüber seiner Außenfläche vorstehender Querstift (38) fest eingesetzt ist, und daß in der Pedalhülse (37) in Umfangsrichtung verlaufende Schlitze (39, 40) vorgesehen sind, in die die überstehenden Enden des Querstiftes (38) eingreifen.

7. Selbstfahrendes Fahrzeug, insbesondere landwirtschaftliche Erntemaschine, nach einem oder mehreren der vorhergehenden Ansprüche 3 bis 6,
**dadurch gekennzeichnet,**
**daß** der Führungskörper (31) segmentartig ausgebildet ist und an der der Schwenkachse abgewandten Seite eine Führungsbuchse (32) für den Sperrbolzen (33) aufweist.

8. Selbstfahrendes Fahrzeug, insbesondere landwirtschaftliche Erntemaschine, nach einem oder mehreren der vorhergehenden Ansprüche 3 bis 7,
**dadurch gekennzeichnet,**
**daß** der Schalthebel (15) eine Nabe (15a) aufweist, deren Mantelfläche an der dem Zusatzpedal (35) zugewandt liegenden Seite ein Sackloch (41) aufweist, in welches der Sperrbolzen (33) einfahrbar ist.

9. Selbstfahrendes Fahrzeug, insbesondere landwirtschaftliche Erntemaschine, nach Anspruch 2,
**dadurch gekennzeichnet,**
**daß** an der Lenksäule (13) mindestens eine konzentrisch zur Schwenkachse (22) verlaufende Führung (44) vorgesehen ist, in der das Schiebeteil (16a) des Schaltgestänges (16) geführt und mittels der Feststellvorrichtung mit der Lenksäule (13) koppelbar ist.

10. Selbstfahrendes Fahrzeug, insbesondere landwirtschaftliche Erntemaschine, nach Anspruch 1,
**dadurch gekennzeichnet,**
**daß** die Lenksäule (13) aus einem Ober- und einem Unterteil (13a, 13b) besteht, die gelenkig miteinander gekoppelt sind.

11. Selbstfahrendes Fahrzeug, insbesondere landwirtschaftliche Erntemaschine, nach Anspruch 10,
**dadurch gekennzeichnet,**
**daß** das Ober- und Unterteil (13a, 13b) um eine gemeinsame Achse (22) schwenkbar sind, daß das Unterteil (13b) allein um diese Achse schwenkbar ist und daß das Oberteil (13a) allein um die das Ober- und Unterteil (13a, 13b) verbindende Achse 47 schwenkbar ist.

12. Selbstfahrendes Fahrzeug, insbesondere landwirtschaftliche Erntemaschine, nach mindestens einem der Ansprüche 10 oder 11,
**dadurch gekennzeichnet,**
**daß** an das Oberteil (13a) der Lenksäule (13) eine aus mehreren Lenkern (50,51) gebildetes Übertragungsgestänge angeschlossen ist, welches ein Blockierglied aufweist.

## Claims

1. A self-propelled vehicle, in particular an agricultural harvester, comprising a driving cab (11) in which a steering column (13) mounted pivotably on at least one stationary bolt (21, 22) is arranged and is secured by means of a fixing device which can be locked and unlocked from an actuating element for the purposes of pivotal movement of the steering column (13), and a shift linkage which is arranged beneath the cab floor and which has a shift lever (15) and to which a shift-transfer element (16) of a transmission (17) which can be shifted in a plurality of stages is pivotably connected, **characterised in that** the shift linkage can be coupled by means of a fixing device which can be actuated as required to the steering column (13) or to a part of the steering column, in such a way that the shift movement of the shift linkage, which is necessary for the transmission shift procedure, can be derived from the pivotal and/or rotary movement of the steering column (13).

2. A self-propelled vehicle, in particular an agricultural harvester, according to claim 1 **characterised in that** the shift lever (15) of the shift linkage is freely rotatably mounted on a bolt (21, 22) which rotationally movably carries the steering column (13), that the shift lever (15) can be rotationally movably coupled to the steering column (13) by means of the entrainment device which is actuable when required, and that there is provided an additional pedal (35) for simultaneous actuation of the entrainment device and the release lever (28) for unlocking the fixing device (26).

3. A self-propelled vehicle, in particular an agricultural harvester, according to claim 1 or claim 2 **characterised in that** the fixing device (26) substantially comprises a spring-loaded locking bolt (33) which is displaceable in the steering axis direction of the steering shaft (14) of the steering column (13) and which is in a displaced relationship with respect to the steering shaft (14) and is guided in a guide body (31) fixedly connected to the steering column (13) and can be moved by means of the additional pedal (35) against the action of the compression spring (34) into the condition of entrainment connection with the shift lever (15).

4. A self-propelled vehicle, in particular an agricultural harvester, according to one or more of claims 2 to 3 **characterised in that** the pivot axis of the additional pedal (35) can be coupled to the pivot axis of the foot pedal (29).

5. A self-propelled vehicle, in particular an agricultural harvester, according to claim 4 **characterised in that** the additional pedal (35) is fixedly connected to a rotatably mounted bolt (36), that rotatably mounted on the bolt (36) is a pedal sleeve (37) on which the foot pedal (29) and the release lever (28) are fixedly arranged in such a way that upon actuation of the foot pedal (29) the bolt (36) which is fixedly connected to the additional pedal (35) is stationary.

6. A self-propelled vehicle, in particular an agricultural harvester, according to claim 5 **characterised in that** fixedly inserted in the bolt (36) is at least one transverse pin (38) which projects with respect to its outside surface and that provided in the pedal sleeve (37) are slots (39, 40) which extend in the peripheral direction and into which the projecting ends of the transverse pin (38) engage.

7. A self-propelled vehicle, in particular an agricultural harvester, according to one or more of preceding claims 3 to 6 **characterised in that** the guide body (31) is of a segment-like configuration and at the side remote from the pivot axis has a guide bush (32) for the locking bolt (33).

8. A self-propelled vehicle, in particular an agricultural harvester, according to one or more of preceding claims 3 to 7 **characterised in that** the shift lever (15) has a hub (15a) whose peripheral surface, at the side towards the additional pedal (35), has a blind hole (41) into which the locking bolt (33) can be introduced.

9. A self-propelled vehicle, in particular an agricultural harvester, according to claim 2 **characterised in that** provided on the steering column (13) is at least one guide (44) which extends concentrically with respect to the pivot axis (22) and in which the slide portion (16a) of the shift linkage (16) is guided and can be coupled to the steering column (13) by means of the fixing device.

10. A self-propelled vehicle, in particular an agricultural harvester, according to claim 1 **characterised in that** the steering column (13) comprises an upper and a lower portion (13a, 13b) which are hingedly coupled together.

11. A self-propelled vehicle, in particular an agricultural harvester, according to claim 10 **characterised in that** the upper and lower portions (13a, 13b) are pivotable about a common axis (22), that the lower portion (13b) is pivotable alone about said axis and that the upper portion (13a) is pivotable alone about the axis (47) connecting the upper and lower portions (13a, 13b).

12. A self-propelled vehicle, in particular an agricultural harvester, according to at least one of claims 10 and 11 **characterised in that** connected to the upper portion (13a) of the steering column (13) is a transfer linkage which is formed from a plurality of links (50, 51) and which has a blocking member.

## Revendications

1. Véhicule autopropulsé, en particulier machine agricole de récolte, avec une cabine de conducteur (11) dans laquelle une colonne de direction (13) est montée pivotante sur au moins un axe (21, 22) stationnaire et est immobilisée au moyen d'un dispositif de blocage qui peut être déverrouillé et verrouillé par un élément d'actionnement à des fins de pivotement de la colonne de direction (13) et avec une tringlerie de changement de vitesse, qui est disposée sous le plancher de la cabine, comporte un levier de changement de vitesse (15) et est reliée de manière articulée à un élément de transmission (16) d'une boîte de vitesses (17) à plusieurs étages, **caractérisé en ce que** la tringlerie de changement de vitesse peut être couplée à la colonne de direction (13) ou à une partie de la colonne de direction à l'aide d'un dispositif de blocage actionné à la demande, de tells sorte que le déplacement de changement de vitesse nécessaire pour le changement de rapport de la boîte de vitesses soit dérivé du mouvement de pivotement et/ou de rotation de la colonne de direction.

2. Véhicule autopropulsé, en particulier machine agricole de récolte, selon la revendication 1, **caractérisé en ce que** le levier de changement de vitesse (15) de la tringlerie de changement de vitesse est monté libre en rotation sur un axe (21, 22) portant avec possibilité de rotation la colonne de direction (13), **en ce qu'**à l'aide du dispositif d'entraînement actionnable à la demande le levier de changement de vitesse (15) peut être couplé en rotation à la colonne de direction (13) et **en ce qu'**une pédale additionnelle (35) est prévue pour l'actionnement simultané du dispositif d'entraînement et du levier de déclenchement (28) pour le déverrouillage du dispositif de blocage (26).

3. Véhicule autopropulsé, en particulier machine agricole de récolte, selon la revendication 1, **caractérisé en ce que** le dispositif de blocage (26) est formé essentiellement d'une tige de verrouillage (33) sollicitée par ressort, qui se déplace en direction de l'axe de l'arbre de direction (14) de la colonne de direction (13), est guidée à l'intérieur d'un élément de guidage (31) solidaire de la colonne de direction (13) et peut être amenée, à l'aide de la pédale additionnelle (35), en liaison d'entraînement avec le levier de changement de vitesse (15), à l'encontre de l'action du ressort de compression (34).

4. Véhicule autopropulsé, en particulier machine agricole de récolte, selon une ou plusieurs des revendications 2 à 3, **caractérisé en ce que** l'axe de pivotement de la pédale additionnelle (35) peut être couplé à l'axe de pivotement de la pédale (29).

5. Véhicule autopropulsé, en particulier machine agricole de récolte, selon la revendication 4, **caractérisé en ce que** la pédale additionnelle (35) est solidaire en rotation d'un axe (36) monté tournant, **en ce qu'**un manchon de pédale (37) est monté tournant sur l'axe (36), manchon sur lequel la pédale (29) et le levier de déclenchement (28) sont montés fixes, de telle sorte que lors de l'actionnement de la pédale (29), l'axe (36) lié à la pédale additionnelle (35) reste immobile.

6. Véhicule autopropulsé, en particulier machine agricole de récolte, selon la revendication 5, **caractérisé en ce qu'**au moins une goupille transversale (38), faisant saillie par rapport à la surface extérieure de l'axe, est insérée dans l'axe (36) et **en ce qu'**il est prévu dans le manchon de pédale (37) des fentes (39, 40) qui s'étendent dans la direction périphérique et dans lesquelles s'engagent les extrémités saillantes de la goupille transversale (38).

7. Véhicule autopropulsé, en particulier machine agricole de récolte, selon une ou plusieurs des revendications 3 à 6, **caractérisé en ce que** l'élément de guidage (31) est conformé en segments et présente sur sa face éloignée de l'axe de pivotement axe de pivotement un manchon de guidage (32) pour la tige de verrouillage (33).

8. Véhicule autopropulsé, en particulier machine agricole de récolte, selon une ou plusieurs des revendications 3 à 7, **caractérisé en ce que** le levier de changement de vitesse (15) comporte un moyeu (15a) dont la surface extérieure, du côté tourné vers la pédale additionnelle (35) présente un trou non débouchant (41) dans lequel la tige de verrouillage (33) peut entrer.

9. Véhicule autopropulsé, en particulier machine agricole de récolte, selon la revendication 2, **caractérisé en ce qu'**il est prévu sur la colonne de direction (13) au moins un guide (44) concentrique à l'axe de pivotement (22) dans lequel la partie coulissante (16a) de la tringlerie de changement de vitesse (16) est guidée et peut être couplée à la colonne de direction (13) à l'aide du dispositif de blocage.

10. Véhicule autopropulsé, en particulier machine agricole de récolte, selon la revendication 1, **caractérisé en ce que** la colonne de direction (13) est formée d'un élément supérieur et d'un élément inférieur (13a, 13b) qui sont liés l'un à l'autre de manière articulée.

11. Véhicule autopropulsé, en particulier machine agricole de récolte, selon la revendication 10, **caractérisé en ce que** l'élément supérieur et l'élément inférieur (13a, 13b) peuvent pivoter autour d'un axe commun (22), **en ce que** seul l'élément inférieur (13b) peut pivoter autour de cet axe et **en ce que** l'élément supérieur (13a) seul peut pivoter autour de l'axe (47) qui relie l'élément supérieur et l'élément inférieur (13a, 13b).

12. Véhicule autopropulsé, en particulier machine agricole de récolte, selon au moins une des revendications 10 ou 11, **caractérisé en ce q**'à l'élément supérieur (13a) de la colonne de direction (13) est reliée une tringlerie de transmission formée de plusieurs leviers (50, 51) qui comporte un élément de blocage.
